# EUROPÄISCHE PATENTSCHRIFT

(11) **EP 2 545 142 B1**
(45) Veröffentlichungstag und Bekanntmachung des Hinweises auf die Patenterteilung: **04.05.2016**
(21) Anmeldenummer: 10716744.7
(22) Anmeldetag: 11.03.2010
(51) Int. Cl.: C10J 3/48, C10J 3/50, C10J 3/62, C10K 1/02, C10K 1/14, C10B 47/30, F02B 43/08

(54) **VERFAHREN UND VORRICHTUNG ZUR PRODUKTION VON SYNTHESEGAS UND ZUM BETREIBEN EINES VERBRENNUNGSMOTORS DAMIT**
METHOD AND DEVICE FOR PRODUCING SYNTHESIS GAS AND FOR OPERATING AN INTERNAL COMBUSTION ENGINE THEREWITH
PROCÉDÉ ET DISPOSITIF POUR PRODUIRE DU GAZ DE SYNTHÈSE ET POUR FAIRE FONCTIONNER UN MOTEUR À COMBUSTION INTERNE AU MOYEN DE CE GAZ

(43) Veröffentlichungstag der Anmeldung: 16.01.2013
(73) Patentinhaber: Schneider, Timo, 53343 Wachtberg (DE); Pektas-Çehreli, Semiha, 50968 Köln (DE)
(72) Erfinder: SCHNEIDER, Arno, 53343 Wachtberg (DE); ÇEHRELI, Ergun, 50968 Köln (DE)
(74) Vertreter: Koch, Theodor
(86) Internationale Anmeldenummer: PCT/DE2010/000259
(87) Internationale Veröffentlichungsnummer: WO 2011/110138

(56) Entgegenhaltungen:
- WO-A1-02/04574
- WO-A1-2009/020442
- WO-A2-2010/015593
- DE-A1-102004 055 407
- DE-A1-102006 017 353
- DE-A1-102007 004 294

## Beschreibung

Die Erfindung betrifft ein Verfahren zur Produktion von Synthesegas unter Herstellung teerbeladener Pyrolyse- und Produktgase sowie von Pyrolyse-Kondensat mit hohem Teeranteil zum Betreiben einer als Zweitakt-Zündstrahlmotor ausgebildeten Gas-Diesel-Verbrennungskraftmaschine, die zur dezentralen Erzeugung von Strom und Wärme dient. Des Weiteren eine Vorrichtung zur Durchführung dieses Verfahrens.

Gemäß der DE 42 38 934 C2 ist ein Verfahrens zur Vergasung derartiger Roh- und Abfallstoffe bekannt, bei welchem die unsortierten Stoffe durch eine Kombination von thermischer Vorbehandlung, Zerkleinerung und Flugstromvergasung vergast werden, um ein CO- und H₂-reiches Gas zu erzeugen. Es wird ein versprödetes, gemahlenes Zwischenprodukt erzeugt, das als Feingut der Flugstromvergasung unterworfen wird. Dieses Gas wird zum Betrieb von Gasmotoren und Gasturbinen oder als Synthesegas verwendet.

Gemäß der DE 10 2004 055-407 A1 ist ebenfalls ein Verfahren zum Betreiben eines Gasmotors mit einem aus organischem Brennstoff, insbesondere Biomasse, hergestellten Synthesegas bekannt, wobei dieser zur dezentralen Energieversorgung dient (BHKW-Anlagen). Es wird dabei eine autotherme Vergasung unter Verwendung einer Festbett-Vergasungseinrichtung durchgeführt. Die Zuführung des erzeugten Synthesegases in den Motorenbrennraum erfolgt zusammen mit der angesaugten Brennluft nach deren Vermischung.

Bei diesen Vergasungsanlagen ist für einen technisch einwandfreien Betrieb ein definierter, nicht wechselnder Brennstoff erforderlich. Sie können insofern nicht direkt variabel mit wechselnden, heterogenen organischen Brennstoffen betrieben werden. Zudem muss durch spezielle Maßnahmen verhindert werden, dass sich Teerablagerungen im Brennraum des Gasmotors bilden.

Zur Behebung dieser Nachteile bezweckt die vorliegende Erfindung die Schaffung eines Verfahrens zur Verwertung von jeglicher denkbarer Biomasse bzw. aufbereiteten organischen Abfällen als Material zur Herstellung eines Brenngases zum Betrieb von Gasmotoren, wobei derartige Materialien bisher in reinen Vergasungsanlagen der Vergasung nicht zugänglich waren. Die Gasmotoren sollen gemäß einer weiteren Aufgabe in effizienten, dezentralen Energieerzeugungsanlagen ab einer Leistung von 500 kWel, oder auch unter gleichzeitiger Wärmeauskopplung betreibbar sein.

Es sollen unter Fortbildung dieser Aufgaben spezielle Gasmotoren verwendet werden, deren Betrieb sowohl mit dem durch Vergasung hergestellten Brenngas als auch mit den bei dessen Herstellung anfallenden Ölen, Kondensaten und Teeren möglich ist. Es gilt dabei ein Verfahren zur dezentralen Energieerzeugung zu realisieren, bei dem die Verbrennungskraftmaschine mit Pyrolysegas, Pyrolyseöl, Teer, Produktgas, Synthesegas oder einer Mischung aus diesen Bestandteilen betrieben werden kann, welche als Dieselanteil in einem Gas-Diesel-Motor einspritzbar sind.

Wesentlicher Erfindungsgedanke ist dabei der, dass im Gegensatz zur einschlägigen Fachwelt, bei welcher Vergasungsprozesse im allgemeinen so geführt werden, dass sauberere, das heißt, teerfreie Brenngase entstehen, wenn eine motorische Nutzung beabsichtigt ist,
nunmehr erfindungsgemäß außer einem erzeugten "hochwertigen Synthesegas", welches teerfrei ist, zusätzliche Pyrolysekondensate mit hohem Teeranteil als Zündöl in einem vorgesehenen speziellen Gasmotor, nämlich Gas-Diesel-Motor verbrannt werden können.

Gemäß dem Stand der Technik sind Niedertemperaturpyrolyseverfahren für Biomasse mit Kondensierung der Teeröle gemäß der DE 198 24 747 A1 bereits bekannt. Ebenso ist es gemäß der Druckschrift bekannt, die mittels eines Waschöls ausgewaschenen Teeröle als Zündöl in Zündstrahlmotoren einzusetzen. Die Zündölaufbereitung von beladenem Waschöl nach Auswaschen der Teeröle aus dem Pyrolysegas erfolgt gemäß der DE 198 24 747 A1 in einfachster Weise durch zwei hintereinander geschaltete Rührwerke, wobei insofern die als Zündöl benötigte flüssige Emulsion der ausgewaschenen Teeröle und des beladenen Waschöls entsteht.

Des Weiteren ist gemäß der EP 2 035 126 B1 ein Homogenisator bekannt, bei dem mittels Zahnkränzen mit genau definierter Zahngeometrie die Zerschneidung der langkettigen Kohlenwasserstoffmoleküle eines zu homogenisierenden Ölgemisches erfolgt.

Es dient dabei im erfindungsgemäßen Verfahren zur Verwendung des anfallenden homogenisierten Gemisches als Zündöl eine Verbrennungskraftmaschine, welche als Zweitakt-Zündstrahlmotor mit Dieseleinspritzung und mit zusätzlicher Gasregelstrecke betrieben wird.

Zielsetzung ist es, ein Verfahren zur dezentralen Energieerzeugung zu realisieren, bei dem die Verbrennungskraftmaschine mit Pyrolysegas, Pyrolyseöl, Teer, Produktgas, Synthesegas oder einer Mischung aus diesen Bestandteilen betrieben werden kann. Hierbei kommt eine Technik zur Produktion von hochwertigem Synthesegas aus festen und/oder flüssigen organischen Brennstoffen, insbesondere Biomasse jeglicher Art, zum Einsatz.

Erfindungsgemäß wird die eingangs genannte Aufgabe durch das Verfahren zur Herstellung eines Synthesegases aus einem in einem Pyrolysereaktor hergestellten Pyrolysegas und einem durch Vergasung erzeugten Produktgas gemäß Anspruch 1 gelöst.

Gemäß Anspruch 1 ist insofern ein Verfahren zur Produktion von Synthesegas unter Herstellung teerbeladener Pyrolyse- und Produktgase sowie von Pyrolyse-Kondensat mit hohem Teeranteil zum Betreiben eines Zweitakt-Zündstrahlmotors, der zur dezentralen Erzeugung von Strom und Wärme dient, mit folgenden Schritten vorgesehen:
a. Zerkleinerung von organischen oder organisches Material enthaltenden Roh- und Abfallstoffen auf die gewünschte Korngröße und Trocknung auf den erforderlichen Wassergehalt dieses Brennstoffes,
b. Zuführen des so aufbereiteten organischen Brennstoffes in einen Pyrolysereaktor,
c. Erzeugen und Zuführen thermische Energie zur Durchführung einer endothermen Zersetzung des organischen Brennstoffes bei einer Pyrolysetemperatur zwischen 400 °C und 650 °C unter Erzeugung von Pyrolysegas und Pyrolysekoks,
d. Reinigen und Abkühlen des Pyrolysegases auf ca. 300 °C und anschließende Gaswäsche mit Abkühlen auf unter 60 °C unter Auskondensation der Teere des Pyrolysegases mit Pyrolysekondensat und/oder Pflanzenöl,
e. Fördern des Pyrolysekokses in einen Vorlagebehälter eines Vergasers oder direkt in den Vergaser und Auffangen der Pyrolysekondensate zur Erzeugung von Zündöl für die als Zweitakt-Zündstrahlmotor ausgebildete Gas-Diesel-Verbrennungskraftmaschine,
f. ganz oder teilweise autotherme Vergasung des Pyrolysekokses unter Zuführung von Luft und/oder technischem Sauerstoff und/oder Wasserdampf zur Bildung eines Produktgases bei Temperaturen von ca. 1000 °C und unter Zuführung von Wärme aus einem Teilstrom rückzuführenden Produktgases zum Heizen des Vergasers,
g. Reinigen und Kühlen des Produktgases auf ca. 300 °C,
h. Rückführung des Teilstromes des Produktgases zum Heizen des Vergasers gemäß Schritt f), unter Aufwärmung in einem Vorwärmer im Hauptstrom des heißen Produktgases,
i. zusätzliches Reinigen des Produktgases oder des nach Zusammenführung aus diesem und dem Pyrolysegas gebildeten Synthesegases von Teer- und Staubpartikeln in einem Gaswäscher zumindest mit einem Waschöl sowie Abkühlen auf eine Temperatur von ca. 40 °C unter Bildung eines teerhaltigen Pyrolysekondensats,
j. zum Waschen des Produktgases wird als Waschflüssigkeit ein Pflanzenöl verwendet, welches nach Sättigung in einer Zündölaufbereitung gereinigt wird,
k. Zusammenführen des noch einen Heizwert von > 15 MJ/Nm³ besitzenden Pyrolysegases mit dem niederkalorischen, zunächst gemäß Schritt i) lediglich gereinigten Produktgas (Heizwert < 10 MJ/Nm³) zu einem Synthesegas,
l. anschließende Reinigung des zum Betreiben der Verbrennungskraftmaschine vorgesehenen Synthesegases in einem Teer-Elektrostatikfilter nahezu vollständig von allen Teer- und Staubpartikeln gemäß Motorenanforderung,
m. Verdichten des gereinigten Synthesegases in einem Synthesegaskompressor auf
   > 200 bar zur direkten Synthesegaseindüsung in die Verbrennungskraftmaschine,
n. Aufarbeitung des mit Teer-und Staubpartinel beladenes Wäschöls gemeinsam mit dem Pyrolysekondensat und dem Teer aus dem Teer-Elektrostatikfilter zu einem flüssigen Gemisch in einer Zündölauf bereitung aus einer Zentrifuge und einem Homogenisator, in welcher eine mechanische Verkürzung der langkettigen Molekülketten erfolgt und dieses homogen durchmischt wird, wobei dieses flüssige homogene Gemisch als Zündöl in die als Zweitakt-Zündstrahlmotor ausgebildete Verbrennungskraftmaschine eingedüst wird,
o. Eindüsen sowohl des hochverdichteten Synthesegases als auch des Zündöls über separate Injektoren in den Brennraum der Verbrennungskraftmaschine und Einbringung der Verbrennungsluft, getrennt von diesen Brennstoffen ebenfalls über einen eigenen Kanal.

Das erfindungsgemäße-Verfahren gemäß Anspruch 1 zur Erzeugung eines Synthesegases und von Pyrolyseöl sowie Kondensat zum Betreiben einer Verbrennungskraftmaschine in Form eines Zündstrahlmotors bzw. eines Zündstrahlmotors, der zur dezentralen Erzeugung von Strom und Wärme dient, zeichnet sich dadurch aus, dass der Brennstoff, z.B. gemischte organische Abfälle, auch aussortierter und getrennter Hausmüll, aber vorzugsweise Biomasse jeglicher Art bis hin zu Schweine-, Rinder- und Hühnermist, aufbereitet und in der ersten Stufe einer Pyrolyseanlage zugeführt wird.

Der in der Pyrolyse entstehende Pyrolysekoks wird zu einem Produktgas vergast. Da die Pyrolyse ein endotherme Zersetzung ist, wird dem Pyrolysereaktor die erforderliche thermische Energie in Form von Wärme in der ersten Stufe (<300 °C - 450 °C) durch das Motorenabgas des anzutreibenden Verbrennungsmotors und in der zweiten Stufe direkt oder indirekt durch das heiße Produktgas aus dem Vergaser oder aber einer Direktfeuerung zugeführt.

Das Einbringen der thermischen Energie kann, unterstützend oder allein, auch über einen Direkteintrag der heißen, aus dem Vergaser ausgetragenen Bettasche und dem Bettmaterial erfolgen. Die Pyrolysetemperatur liegt i. d. R. zwischen 400 °C und 650 °C (Anspruch 2).
Das erzeugte Pyrolysegas (Heizwert > 15 MJ/Nm³) wird anschließend in einem Heißgaszyklon von mitgerissenen Staubpartikeln gereinigt.

Aus dem Pyrolysekoks wird, vorzugsweise gemäß Anspruch 3 in einem atmosphärischen Vergaser bzw. einem stationären Wirbelschichtvergaser, ein niederkalorisches Produktgas (Heizwert < 10 MJ/Nm³) erzeugt und anschließend ebenfalls in einem Heißgaszyklon gereinigt. Die Vergasung ist ein endothermes Verfahren. Hier wird die zur Aufrechthaltung des Prozesses erforderliche Energie aus dem erzeugten Produktgasstrang entnommen. Anstelle der zugeführten, ebenfalls erforderlichen Luft kann wahlweise technischer Sauerstoff und/oder Dampf eingesetzt werden.

Es werden erfindungsgemäß getrennt von einander Pyrolyse- und Produktgase erzeugt, welche teerbeladen sind und dabei vorzugsweise auch hoch teerbeladen sein können. Entsprechend werden dann Pyrolysekondensate mit hohem Teeranteil gewonnen.

Bei dem erfindungsgemäßen Verfahren handelt es sich somit nicht wie bei dem Verfahren gemäß der DE 102 58 485 A1 um ein Verfahren, bei welchem Stoffe als Energieträger zunächst einer Pyrolyse- und anschließend einer Wirbelschichtvergasung unterzogen werden, wobei das Pyrolysegas im Außenkanal des Wirbelschichtvergasers mit dem umlaufenden Produktgas des Vergasers vereinigt wird und gemeinsam durch die Wirbelschicht geführt wird, um gleichzeitig eine Reinigung von teerartigen Kohlenwasserstoffen vorzunehmen (Pyrolysekondensate und Pyrolyseöle werden in situ vergast).

Vielmehr wird lediglich Pyrolysekoks gemäß dem erfindungsgemäßen Verfahren aus dem Pyrolyse-Reaktor dem verwendeten atmosphärischen Vergaser zugeführt, wobei Produktgas und Pyrolysegas an diesen beiden Reaktoren zunächst getrennt von einander gereinigt und gekühlt werden.

Pyrolyse- und Produktgas werden nach der jeweiligen Reinigung und Kühlung zu Synthesegas vermischt. In einem Gaswäscher erfolgt die Reinigung von Teeren und weiteren Staubpartikeln. Dabei wird das ca. 300 °C heiße Synthesegas bis auf ca. 40 ° heruntergekühlt. Als Waschflüssigkeit wird vorzugsweise Pflanzenöl als Waschöl eingesetzt. Wenn das Waschöl gesättigt ist, wird es in einer Zentrifuge gereinigt und vorzugsweise, aber nicht ausschließlich, gemeinsam mit dem Pyrolyseöl, Kondensat und Teer aus dem Teer-Elektrostatikfilter in einem Homogenisator aufgearbeitet. Dabei werden mit einem speziellen physikalischen Verfahren langkettige Moleküle verkürzt. Dies hat zur Folge, dass das Waschöl mit dem Pyrolyseöl und/oder dem Pyrolysekondensat homogen gemischt und als Pilotöl in der Verbrennungskraftmaschine eingesetzt werden kann.

Nachdem das Gas so gereinigt wurde, durchläuft es zusätzlich einen elektrostatischen Teerfilter, in dem letzte verbliebene Verunreinigungen entfernt werden. Auf diese Weise von Teer und Staubpartikeln befreit, wird das Synthesegas hoch verdichtet (> 200 bar) einer Verbrennungskraftmaschine zugeführt, wobei das verdichtete Gas über einen separaten Injektor direkt in den Brennraum eingedüst wird. Die Verbrennungsluft wird über einen eigenen Kanal in den Motor eingebracht (Anspruch 4). Weitere vorteilhafte Ausbildungen des Verfahrens ergeben sich aus den Ansprüchen 5-7.
Als Verbrennungskraftmaschine kommen dabei langsam laufende Zweitakt-Zündstrahlmotoren zum Einsatz. Nur in einem derartigen speziellen Zweitakt-Zündstrahlmotor und nicht in üblicherweise verwendeten Vier-Takt-Motoren, wie diese bspw. aus der DE 198 24 747 A1 bekannt sind, ist es dabei möglich, den Dieselanteil nicht nur lediglich in geringer Prozentzahl als bloßes "Zündöl" zu führen, sondern mit dem erwähnten hohen Prozentanteil an Pyrolyseöl und Pyrolysekondensat, wobei dies auch einen hohen Teeranteil aufweisen kann.

Es kann dabei der "Dieselanteil", bei welchem Zündöl aus Pyrolyseöl, Pyrolysekondensat und/oder Teeröl gebildet wird, bis zu 100 % des zugeführten Brennstoffes darstellen, wobei dieser Anteil vorzugsweise größer als 40 % ist.

Das Pyrolysegas und Pyrolysekondensat wird insofern im Gegensatz zum Stand der Technik nicht in den Vergaser zurückgeführt und beseitigt, sondern separat unmittelbar als Brennstoff in dem vorgesehenen speziellen "Zweitakt-Zündstrahlmotor" verwendet.

Hierfür ist die Verwendung einer speziellen Einrichtung zur Zündölaufbereitung notwendig, in welcher zum einen das beladene Waschfluid, das Pyrolyseöl sowie das Pyrolysegas zusammengeführt werden und in einem Separator von groben Verunreinigungen dann gereinigt werden. Andererseits erfolgt dann nach Zugabe von Teeren aus den Elektrostatikfiltern die Herstellung von Zündöl bzw. Pyrolysekondensat mit hohem Teeranteil, wobei dies insofern in großen Mengen zum Betreiben des Zweitakt-Zündstrahlmotors verwendet werden kann.

In der Zündölaufbereitung gilt es ferner, über einen speziellen Homogenisator die langkettigen Molekularketten der Kohlenwasserstoffmoleküle physikalisch zu zerkleinern und homogen zu durchmischen. Dies ist für Niedertemperaturverfahren gemäß der DE 198 24 747 A1 an sich bereits bekannt.

Erst durch eine derartige spezielle Verfahrensvariante können auch problematische organische Brennstoffe eingesetzt werden, wobei das aufbereitete Pyrolyseöl und Pyrolysekondensat als Zündöl für den Zündstrahlmotor dient.

In der Zündölaufbereitung erfolgt dabei eine Homogenisierung auch mittels genau definierter Zahngeometrie zur Zerschneidung der langkettigen Kohlewasserstoffmoleküle. Weiterhin wird erfindungsgemäß ausschließlich Pflanzenöl zur Wäsche verwendet. Die Wäsche ist dabei gleichzeitig eine Quenche, bei der die Gastemperatur von 300 ° auf 40 ° durch diese Waschflüssigkeit heruntergekühlt wird.

Vorzugsweise können in der Vergasungsstufe technischer Sauerstoff oder Wasserdampf (H₂O) eingedüst werden. Durch die Sauerstoffeindüsung in der Vergasungsstufe wird der N₂-Anteil im Synthesegas stark reduziert. Der Heizwert Hu steigt auf über 8,0 MJ/Nm³ Synthesegas. Hauptbestandteile sind CO, H₂, CO₂, CH₄ und in kleinen Mengen andere Gase. Hierdurch verringert sich die produzierte Synthesegasmenge, sodass die nachfolgenden Vorrichtungen zur Kühlung, Reinigung, Verdichtung und Speicherung kleiner dimensioniert werden können.

Ebenfalls optional können im Normalbetrieb CO₂, H₂ und CO ausgewaschen und anderweitig verwendet werden, z.B. zur Verflüssigung. Aus der Reduktion ergeben sich Vorteile hinsichtlich der auszulegenden Dimensionen der Komponenten. So können diese auf Grund des geringeren Volumens kleiner ausgelegt werden.

### Die Vorteile der Erfindung

a) Bei reinen Vergasungsanlagen ist für einen technisch einwandfreien Betrieb ein definierter, nicht wechselnder Brennstoff erforderlich.
   Die Pyrolyseanlage kann variabel mit wechselnden, heterogenen organischen Brennstoffen betrieben werden. Erzeugt werden in verschiedenen Anteilen hauptsächlich Pyrolysegas, Pyrolysekoks, Pyrolyseöl und Teer. Der Pyrolysekoks wird in einem zweiten Schritt in einem Vergaser vergast.
b) Einsatz von jeglicher denkbarer Biomasse bzw. aufbereiteten organischen Abfällen als Brennstoff in effizienten, dezentralen Energieerzeugungsanlagen ab einer Leistung von 500 kWₑₗ, auch mit Wärmeauskopplung
c) Entsorgung von Problemstoffen wie z.B. Hühnermist oder ähnlichem und umfangreiche nachhaltige Vermeidung von Umweltbelastung.
d) Umweltschonende Lösung für Entsorgungsprobleme und Reduzierung von Entsorgungskosten, da Reststoffe mineralisch sind und max. 2-3 % des eingesetzten Brennstoffes ausmachen.
e) Produktion von hochqualitativen Synthesegas, zusammengesetzt aus Pyrolyse und Produktgas mit einem Heizwert von > 10 kJ/Nm³. Insbesondere bei Einsatz von technischem Sauerstoff anstelle von Luft in der Vergasungsstufe wird der N₂-Anteil erheblich gesenkt. Dadurch ergibt sich eine Verringerung der zu kühlenden, reinigenden, verdichtenden und, optional, speichernden Synthesegasmenge sowie eine Erhöhung des Systemwirkungsgrades.
f) Durch die aufwändige Gasreinigung und insbesondere Umgehung von Turbolader und Ladeluftkühler, werden Ablagerungen von Staub und Kondensation von Teeren nahezu vollkommen vermieden.
g) Verwendung vom Pyrolyseöl, Kondensat und Teer als Zündöl für das Synthesegas. Daher auch kein Entsorgungsaufwand.

### Ausführungsbeispiele

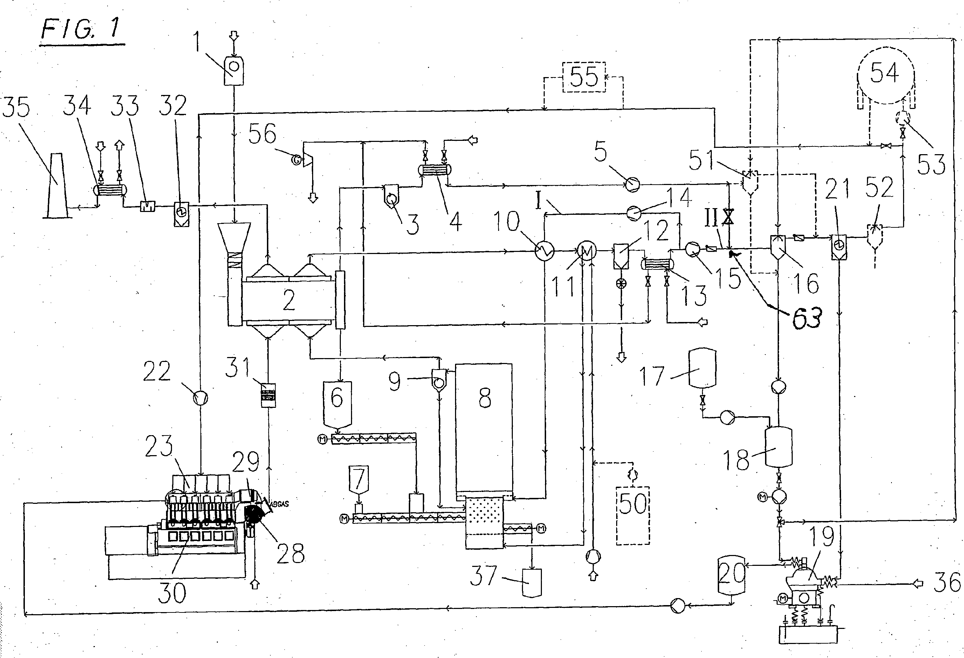

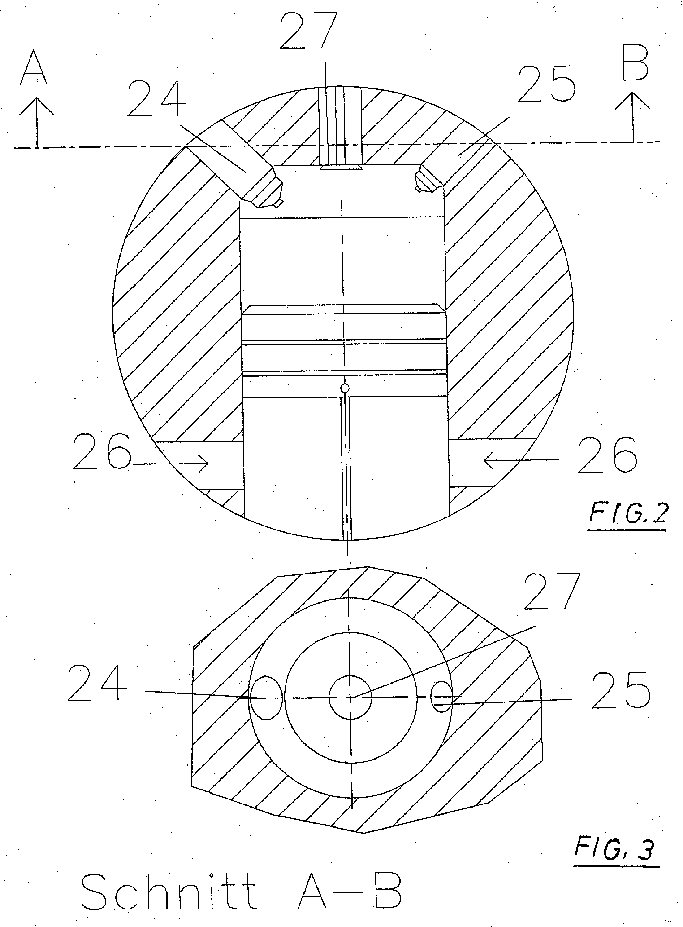

Der Verfahrensablauf und die wesentlichen Anlagenkomponenten sind für ein bevorzugtes Ausführungsbeispiel in Figur 1, 2 und 3 der Zeichnungen dargestellt. Fig. 1 zeigt

### Brennstofftrockner (1)

Der nach der Anlieferung in einem Schredder auf die gewünschte Korngröße zerkleinerte Brennstoff wird in einem Trockner (1) auf den für den jeweiligen Brennstoff erforderlichen Wassergehalt getrocknet. Die thermische Energie für den Trocknungsprozess wird aus dem Niedertemperaturkühlsystem des Motors (< 90 °C) und sonstiger Systemabfallwärme gewonnen. Der Trockner kann in verschiedenen Bauformen ausgeführt sein, vorzugsweise kommt jedoch ein Bandtrockner zum Einsatz.

Aus dem Trockner wird der Brennstoff mittels Förderschnecke oder Förderband in einen Brennstoffvorlagebehälter für den Pyrolysereaktor gefördert.

Die Aufbereitung des Eingangsbrennstoffes ist daher wichtig, da hiervon die Gasqualität und der Kaltgaswirkungsgrad maßgeblich beeinflusst wird.

### Pyrolysereaktor (2)

Die Pyrolyse erfolgt vorzugsweise in einem zweistufigen Drehrohrpyrolysereaktor (2).

Die Pyrolyseanlage kann mit wechselnden Brennstoffen (allen denkbaren organischen kohlenstoffhaltigen Materialien, z.B. organischen Abfällen) betrieben werden und benötigt thermische Energie von außen (exothermes Verfahren). Erzeugt werden in verschiedenen Anteilen hauptsächlich Pyrolysekoks, Pyrolyseöl und Pyrolysegas. In der ersten Stufe wird die thermische Energie in Form von Wärme über das Motorenabgas zugeführt. In der zweiten Stufe wird vorzugsweise das Produktgas (ca. 950 °C) aus der Vergasung direkt oder über Wärmetauscher zur weiteren Erhöhung der Pyrolysetemperatur eingesetzt. Auch eine Direktfeuerung oder der Eintrag von thermischer Energie in Form von heißer Bettasche und Bettmaterial aus dem Vergaser ist möglich. Hierfür ist ein Lager (37) mit Eintragvorrichtung vorgesehen. Die Pyrolysetemperatur liegt hier zwischen 400 °C und 650 °C. Bei dem eintretenden Zersetzungsprozess fallen jeweils ein Produkt in festem (Pyrolysekoks), flüssigem (Kondensat, Pyrolyseöl) und gasförmigem (Pyrolysegas) Aggregatzustand in verschiedenen Mengen an.

### 2.1. Pyrolysekoks

Der Pyrolysekoks, der in der Hauptsache aus reinem Kohlenstoff besteht, wird vorzugsweise aus dem Pyrolysereaktor in einen Vorlagebehälter (7) für den Wirbelschichtvergaser (8) gefördert. Eine andere Form der Lagerung ist ebenfalls möglich.

### 2.2. Pyrolyseöl

Das Pyrolyseöl wird aufgefangen und dem Zündöl für den Motor beigemischt und/ oder direkt in den Vergaser (8) eingebracht.

### 2.3. Pyrolysegas

Das Pyrolysegas wird nach einer Grobreinigung in einem Heißgaszyklon (3) in einem Gaskühler (4) auf die erforderliche Temperatur gekühlt. Mit einem Druckerhöhungsgebläse (5) wird das Pyrolysegas mit dem Produktgas in einer gemeinsamen Leitung zusammengeführt. Optional kann eine separate Gaswäsche (51) eingesetzt werden.

### Heißgaszyklon Pyrolysegasstrom (3)

In dem Heißgaszyklon werden im Gasstrom mitgerissene Staubpartikeln mit einer Korngröße > 0,1 mm ausgeschleust. Dadurch wird u. a. der abrasive Effekt im Gasstrom gemindert und das vorzeitige Verstopfen der Wärmetauscher verhindert.

### Gaskühler (4)

In dem Wärmetauscher wird das Pyrolysegas von ca. 580 °C auf ca. 300 °C abgekühlt. Die dabei ausgekoppelte thermische Energie wird zur Erzeugung von Dampf genutzt, der wiederum eine Dampfturbine (56) zur Stromerzeugung antreibt.

### Druckerhöhungsgebläse (5)

Das Druckerhöhungsgebläse dient zum Ausgleich des Druckverlustes in der Gasleitung und den Apparaten. Außerdem kann der Pyrolysegasstrang beim Zusammenführen mit dem Produktgasstrang genauer reguliert werden.

### Brennstoffvorlage Vergaser (6)

In diesem Behälter wird der aus dem Pyrolysereaktor ausgetragene Pyrolysekoks (PK) aufgefangen und zwischengelagert. Der PK ist homogen und besteht aus nahezu 100 % Kohlenstoff. Damit ist er ein hervorragender Brennstoff für den Vergasungsreaktor (8).

### Vorlagebehälter für Bettmaterial (7)

In diesem Behälter wird das Material für die Ausbildung eines Wirbelschichtbettes aufbewahrt. Das Bettmaterial ist i. d. R. Dolomit oder ein ähnlicher Kalkstein. Durch Veränderung der Zusammensetzung des Bettmaterials werden bei Bedarf katalytische Wirkungen im Vergasungsprozess erreicht.

### Atmosphärischer Vergaser (8)

Zur Vergasung wird hier ein atmosphärischer Vergaser, vorzugsweise ein stationärer Wirbelschichtvergaser mit gestufter Luftzuführung, der aufgrund der intensiven Durchmischung optimale Bedingungen für die erwarteten Gas-/Feststoff-Reaktionen liefert, eingesetzt. Die Vergasung erfolgt autotherm mit Luft bei einer Temperatur von mindestens 900 °C, zu deren Erreichen und Aufrechterhaltung ein Teil des zur Vergasung eingesetzten Brennstoffs verbrannt bzw. teilverbrannt wird. Die zur Fluidisierung und Vergasung erforderliche Luft wird durch gleichmäßig im unteren Primärboden und oberen Sekundärboden des Vergasers verteilte Düsen mit Hilfe eines Zuluftgebläses in den Vergasungsraum eingetragen. Optional ist hier der Einsatz von, in einem Sauerstoffgenerator (50) hergestelltem, reinem Sauerstoff anstelle von Luft möglich. Die Querschnittfläche und Höhe des Vergasungsraums sind so gewählt, dass ausreichende Kontakt- und Verweilzeiten des Produktgases von ca. 5 Sekunden bei einer Leerrohrgeschwindigkeit von < 1,5 m/s erreicht werden, bevor das Produktgas den Vergasungsraum mit über 1.000 °C am Kopfende verlässt. In einem nachgeschalteten Abhitzewärmetauscher (10), wird das Produktgas auf ca. 250 °C abgekühlt. Die ausgekoppelte Wärme wird wahlweise auch zur Vorwärmung der einzusetzenden Frischluft, optional Sauerstoff (50), zur Dampferzeugung für eine sekundäre Stromerzeugung über eine Dampfturbine, als Prozesswärme oder zur Wasserraufwärmung für Heizzwecke genutzt.

Zur Kontrolle der Vergasungstemperatur und zur Homogenisierung des Produktgases wird eine geregelte Teilmenge I des abgeführten Produktgases nach Entstaubung (12, 13) und Abkühlung im Abhitzewärmetauscher (10), bzw. in einem Vorwärmer für das in das in den Vergaser (8) rückzuführende Produktgas, mit Hilfe eines Kreislaufgebläses (14) zusammen mit der vorgewärmten Frischluft in den Vergasungsraum zurückgeführt. Der restliche Teil II des Gases wird zur Nutzung im Gas-Diesel-Motor ausgeschleust, welcher als Zweitakt-Zündstrahlmotor (30) ausgebildet ist.

Der Betrieb des Vergasers erfolgt weitgehend frei von Störungen bedingt durch inhomogenen Brennstoff, da hier hauptsächlich Pyrolysekoks als Brennstoff eingesetzt wird.

### Heißgaszyklon (9) - für Produktgasstrom

Nach dem Abhitzekessel wird das Synthesegas in einem Heißgas-Zyklonabscheider entstaubt. Dabei werden im Gasstrom mitgerissene Staubpartikeln mit einer Korngröße > 0,1 mm ausgeschleust. Dadurch wird u. a. der abrasive Effekt im Gasstrom gemindert und das vorzeitige Verstopfen der Wärmetauscher vermieden.

### Vorwärmer (10) für die rückzuführende Teilmenge des Produktgases

Ein Teil des Produktgases wird rezirkuliert, d.h., es wird wieder in den Vergaser (8) zurückgeführt, um den thermischen Prozess aufrecht zu halten. In dem Vorwärmer erfolgt eine Temperaturerhöhung der zum Vergaser rezirkulierenden Teilmenge des Produktgases und eine Abkühlung im Hauptgasstrom.

### Luftvorwärmer (11)

Hier wird die hohe Wärme im Produktgasstrom genutzt, um die Temperatur der für die Vergasung erforderlichen Luftmenge zu erhöhen und dabei die Effizienz im Vergaser zu steigern.

### Schlauchfilter (12)

Dieser Filter ist hochtemperaturbeständig und dient der Abscheidung der im Produktgasstrom verbliebenen feinen Staubpartikel. Der abgeschiedene Feinstaub wird in einem geschlossenen Container gesammelt und entsorgt. (Flugasche)

### Gaskühler (13)

In diesem Gaskühler wird die Temperatur des Produktgases auf ca. 300 °C abgesenkt. Bei dieser Temperatur sind die im Gas enthaltenen Teerpartikel noch nicht auskondensiert.

### Kreislaufgebläse (14)

Ein Teil des erzeugten Produktgases wird zur Aufrechthaltung des thermischen Prozesses im Vergaser vom Hauptgasstrang abgezweigt und in den Vergaser zurückgeführt. Die Rückführung erfolgt über dieses Gebläse.

### Produktgas Druckerhöhungsgebläse (15)

Das Druckerhöhungsgebläse dient zum Ausgleich des Druckverlustes in der Gasleitung und den Apparaten. Außerdem kann der Pyrolysegasstrang beim Zusammenführen mit dem Produktgasstrang genauer reguliert werden.

### Synthesegaswäscher (16)

Das zu reinigende Produktgas und Pyrolysegas wird über eine Sammelleitung dem Synthesegaswäscher (16) zugeführt, sofern ein zusätzlicher Gaswäscher (51) für das Pyrolysegas abgeschaltet ist. Der Synthesegaswäscher besteht aus einem Strahlgaswäscher mit einem nach geschalteten Entspannungsbehälter und einen Tropfenabscheider. Die Auswaschung erfolgt über einen Waschflüssigkeitskreislauf. Im Strahlgaswäscher wird ein Unterdruck von etwa 5 mbar erzeugt. Reicht dieser Unterdruck für die Absaugung aus, so kann auf einen Ventilator verzichtet werden.

Im Kolonnensumpf wird Pflanzenöl vorgelegt und damit die Prozessgasreinigung über den Waschkreislauf realisiert. Entsprechend der sich einstellenden Konzentration an Stäuben wird der Waschkreislauf beladen und über die Förderpumpe automatisch ausgekreist und der Kolonnensumpf neu befüllt. Der Prozess kann auch kontinuierlich gestaltet werden. Zur Wärmeabführung wird ein Kühler im Waschkreislauf installiert, der mit Kühlwasser 25 °C betrieben wird.

Das gereinigte Prozessgas verlässt den Synthesegaswäscher mit einer Temperatur von etwa 40 °C, die dem Taupunkt unter diesen Bedingungen entspricht. Die durch die Temperaturabkühlung von 300 °C auf 40 °C abgeführte Wärme wird in einem Wärmetauscher ausgeschleust und als Prozesswärme zur Erwärmung von Kondensat usw. eingesetzt.

Die Anlage besitzt einen Steuerkasten, von dem der automatische Betrieb sichergestellt wird. Die komplette Anlage wird als Baugruppe geliefert und kann nach Anschluss der bauseitigen Leistungen sofort in Betrieb gesetzt werden,

### Frischöltank (17)

Dieser Tank dient zum Lagern des frischen Waschöls. Aus diesem Tank wird die aus dem Waschfluidtank (18) als Zündöl entnommene Menge beladenen Öls mit frischem Öl aufgefüllt.

### Waschfluidtank (18)

Hier wird das das aus dem Gaswäscher aus geschleuste, beladene Waschfluid aufgefangen und gelagert. Aus diesem Tank werden jeweils die für die Gaswäsche und zum Einsatz als Zündöl benötigte Menge Fluid entnommen.

### Zündölaufbereitung (19)

Hier werden das beladene Waschfluid, das Pyrolyseöl, sowie das Pyrolysekondensat zusammengeführt und zuerst in einem Separator von groben Verunreinigungen gereinigt. Nach Zugabe von Teer aus dem Elektrostatikfilter (21) werden in einem Homogenisator die langkettigen Molekularketten physikalisch zerkleinert und homogen durchmischt. Durch dieses Verfahren können auch problematische Brennstoffe eingesetzt werden. Das so aufbereitete Öl dient als Zündöl für den Zündstrahlmotor.

### Puffertank für Zündöl (20)

In diesem Tank wird das aufbereitete Öl als Zündöl gelagert.

### Teer-Elektrostatikfilter (21)

Das Teer-Elektrostatikfilter besteht aus einem vertikal durchströmten Filterfeld mit rundem Querschnitt. Um eine gleichmäßige Gasströmung und somit optimale Abscheideleistung zu gewährleisten, wird das Rohgas vor Erreichen des Filterfeldes durch eine Gasverteilung geführt.

Das Filterfeld besteht aus in Waben ausgeführten Niederschlagselektroden, zwischen denen die Sprühelektroden angeordnet sind. Die scharfkantigen Bandelektroden gewährleisten eine höchstmögliche Filterspannung mit optimaler Koronaentladung. Ein Verschleiß der Elektroden findet praktisch nicht statt.

Das elektrische Sprühsystem wird von den Stützisolatoren getragen. Die Isolatorflächen werden, um Überschläge, besonders in den Anfahr- und Stillstandperioden zu vermeiden, ständig durch eine elektrische Begleitheizung trocken gehalten.

Zwischen den Sprüh- und Niederschlagselektroden liegt eine hohe Gleichspannung an. Durch das sich aufbauende elektrische Feld und die dabei, aus den scharfen Kanten der Sprühelektroden, austretenden Elektronen werden die abzuscheidenden Partikel ionisiert und von den Niederschlagselektroden angezogen. Hier geben sie ihre Ladung ab und lagern sich an die Elektroden an.

Die Abreinigung des Filtersystems erfolgt über eine periodisch, wiederkehrend durchzuführende Heißdampfreinigung. Anschlussflansche sind am Filter vorgesehen. Die Reinigung muss, je nach Verschmutzungsgrad vom Betreiber geregelt werden.

Das abgeschiedene Kondensatgemisch (Teer), welches von den Niederschlagselektroden abtropft, sammelt sich im unteren Bereich des Filters und wird über einen Tauchverschluss in ein bereitgestelltes Auffangbehältnis abgeleitet.

### Synthesegaskompressor (22)

Das Synthesegas muss bei einem Zweitakt Zündstrahlmotors mit einem Druck von ca. 200 bar in den Brennraum eingeführt werden. In diesem Kompressor können bis zu 250 bar Druck aufgebaut werden.

### Synthesegasregelstrecke (23)

Hier werden für den Motor optimierte Parameter des Synthesegases, wie z. B. Temperatur und Druck, überwacht und bei Bedarf geregelt.

### Separate Synthesegaseindüsung (24)

Die separate Synthesegaseindüsung mit einem Druck von über 200 bar hat den großen Vorteil, dass es vor der Einbringung in den Motorraum zu keinerlei Kondensatbildung kommen kann. Das geschieht meistens bei der Mischung von Luft und Gas vor dem Turbolader. Hier kommt es dann regelmäßig zur Schichtbildung von Teeren und zusätzlich zur Verstopfung des Ladeluftkühlers. Das wird durch die direkte Einbringung des Gases in den Zylinder verhindert und es kommt zusätzlich zu einer besseren Ausregelung des Gasgemisches.

### Zündöleindüsung (25)

Hier wird das aufbereitete Öl separat als Zündöl in den Zylinder eingedüst.

### Lufteinlassschlitze (26)

Hier wird die über den Turbolader angesaugte Luft mit leichtem Überdruck eingebracht.

### Auslassventil (27)

### Turbolader (28)

### Ladeluftkühler (29)

### Zweitakt-Zündstrahlmotor (30)

Der Zündstrahlmotor (Dual-Fuel-Engine), auch Diesel-Gas-Motor genannt, basiert thermodynamisch auf dem Prinzip des Dieselprozesses. Er vereint die Vorteile der Dieselmotorentechnik mit der von Gas-Ottomotoren. So besitzen Zündstrahlmotoren neben der Dieseleinspritzung auch immer zusätzlich eine Gasregelstrecke wie beim Gas-Ottomotor und können daher wahlweise mit zwei Brennstoffen betrieben werden.

Das Eindüsen von Zündöl ist deshalb erforderlich, da der Zündstrahlmotor keine Zündkerzen besitzt. Üblicherweise ist, abhängig vom Motor und Betriebsweise, ein Zündöleinsatz von 8 % bis 20 % erforderlich, damit der Gasanteil sicher gezündet wird.

Wahlweise kann der Zündstrahlmotor mit verschiedenen Diesel/Gas Anteilen (20 % : 80 % - 100 % : 0%) betrieben werden. Das gute Teillastverhalten und der hohe el. Wirkungsgrad des Dieselmotors werden unverändert beibehalten.

Im Falle eines Viertakt-Zündstrahlmotors wird die Arbeitsenergie wie bei einem Ottomotor als Gas-Luft- Gemisch über das Ansaugsystem in die Zylinder eingebracht und lediglich die zum Zünden des Treibstoffgemisches benötigte Energie als Diesel eingedüst.

Bei einem Zweitakt-Zündstrahlmotor wird lediglich die Luft über den Turbolader in den Brennraum des Zylinders gedrückt. Gas und Zündöl werden über jeweils separate Einspritzdüsen unter hohem Druck in den Brennraum eingebracht. Das hat den Vorteil, dass in Synthesegasen befindliche Partikel und Teere nicht vor der Einbringung in den Verbrennungsraum an Rohrleitungen oder Apparaten kondensieren können. Zweitakt-Motoren haben in der Regel höhere elektrische Wirkungsgrade als Viertakt-Motoren.

Der Zündstrahlmotor hat den weiteren Vorteil, dass erheblich weniger Partikel ausgestoßen werden als bei einem Diesel. Die Schadstoffbilanz bezogen auf CO₂ und andere Abgaskomponenten ist ebenfalls sehr gut.

Zündstrahlmotor-BHKW-Anlagen sind wie die Dieselmotor-BHKW-Anlagen uneingeschränkt für die Notstromversorgung in z.B. Krankenhäuser, Hotels, Flughäfen, Kaufhäuser, Sprinkleranlagen etc. zugelassen.

### SCR- und Oxi-Kat (31)

Da es sich bei dem Motor um einen Zündstrahlmotor mit ca. 8 % Zündölanteil handelt, muss zu Einhaltung der Stickstoffgrenzwerte gemäß TA-Luft ein SCR-Katalysator eingesetzt werden.

### Elektrostatikfilter (32) für das Motorabgas

Das E-Filter dient in erster Linie als Staubfilter für das Abgas, um die Partikelemissionen unter die Werte der TA-Luft zu bringen.

### Abgasschalldämpfer (33)

### Abgaswärmetauscher (34)

### Schornstein (35)

### Eintrag (36) des Pyrolyseöls und Kondensats in Zündölaufbereitung (19)

### Lager (37) mit einer Eintragvorrichtung für Bettasche und Bettmaterial des Vergasers

### Optionale Vorrichtungen

### Sauerstoffgenerator (Optional) (50)

### Gaswäscher für Pyrolysegas (Optional) (51)

Das Pyrolysegas wird in diesem Gaswäscher von langkettigen Kohlenwasserstoffen, in Form von z.B. Teeren, durch Auskondensieren gereinigt. Das Waschmedium ist wahlweise Wasser, Biodiesel, Pflanzenöl oder ein anderes Fluid biogenen Ursprungs. Bei Einsatz von Pflanzenöl oder Biodiesel als Waschflüssigkeit wird das beladene Fluid gemeinsam mit dem anfallenden Öl, Teer oder Kondensat dem Zündöl für den Motor beigemischt.

### CO₂-Wäscher (Optional) (52)

Optional kann das im Synthesegas enthaltene CO₂ ausgewaschen und direkt in flüssiger Form oder gasförmig als Kohlensäure, als Trockeneis oder in Gewächshäusern als Wachstumsfördernde Maßnahme eingesetzt werden.

Die Ausschleusung von Kohlendioxid aus dem Synthesegas hat den Vorteil, dass durch die Verringerung des Synthesegasvolumens um den Anteil von Kohlenmonoxid und Wasserstoff der energetische Aufwand für die Kompression des Gases auf über 200 bar verringert wird. Außerdem hat das dem Motor zugeführte Gas bedingt durch den höheren Methananteil einen höheren Heizwert und verbrennt dadurch effizienter.

### Synthesegaskompressor (Optional) (53)

### Gasspeicher (Optional) (54)

### Synthesereaktor (Optional) (55)

### Fischer-Tropsch-Verfahren

Die von Professor Franz Fischer und Dr. Hans Tropsch vor über 80 Jahren entdeckte und zum Patent angemeldete Kohlenwasserstoffsynthese ist eine zweistufige Reaktionsfolge, mit der feste Brennstoffe wie Biomasse, Koks oder andere organische Stoffe in flüssige Treibstoffe wie Dieselkraftstoff und Benzin umgewandelt werden können. Dabei werden mit Hilfe von Metallkatalysatoren flüssige Kohlenwasserstoffe aus den Kohlenmonoxid- und Wasserstoffanteilen eines Synthesegases hergestellt. Die hierbei synthetisierten Kohlenwasserstoffe bestehen hauptsächlich aus flüssigen Alkanen, auch Paraffinöle genannt. Als Nebenprodukte fallen noch Olefine, Alkohole und feste Paraffine an.

Das erforderliche Synthesegas lässt sich durch Pyrolyse bei 600 °C und höher oder durch Vergasung mit Wasserdampf und/oder Sauerstoff bei Temperaturen oberhalb 900 °C aus Biomasse, Koks oder anderen Kohlenstoffhaltigen organischen Stoffen erzeugen.

Die Ausschleusung von Wasserstoff und Kohlenstoff hat in dem vorgestellten System den weiteren Vorteil, dass durch die Verringerung des Synthesegasvolumens um den Anteil von Kohlenmonoxid und Wasserstoff der energetische Aufwand für die Kompression des Gases auf über 200 bar verringert wird. Außerdem hat das dem Zündstrahlmotor zugeführte Synthesegas bedingt durch den höheren Methananteil einen höheren Heizwert und verbrennt dadurch effizienter.

### Dampfturbine (56)

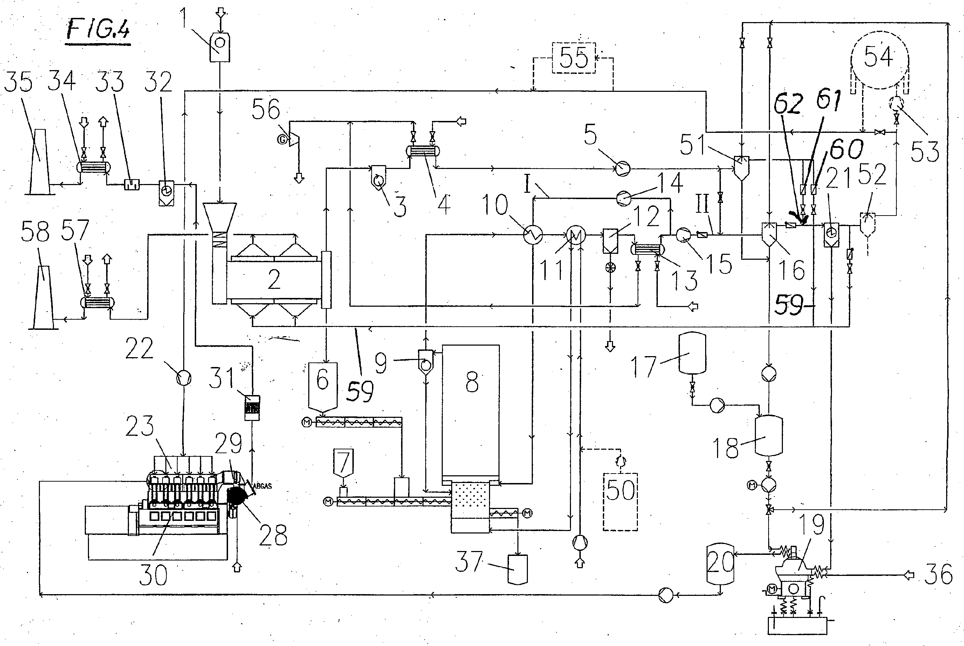

In Figur 4 ist ein weiteres Ausführungsbeispiel dargestellt.

Dort erfolgt die Zuführung der thermischen Energie zur Zersetzung der organischen Brennstoffe im Pyrolysereaktor nicht durch die Wärme eines heißen Produktgases aus dem Vergaser oder durch das Motorenabgas der Verbrennungskraftmaschine, sondern durch Verbrennen eines im Pyrolysereaktor erzeugten, rückgeführten Teils des Pyrolysegases. Die Rückführung in den Pyrolysereaktor erfolgt über eine Leitung (59), welche von dem Gaswäscher (51) über eine Regelstrecke (60) bis zum Pyrolysereaktor (2) geführt ist und dabei die Regelstrecke (61) für den mit dem Produktgas zusammenzuführenden Teil des Pyrolysegases umgibt. Die Zusammenführung von Produktgas und des zusammenzuführenden Teils des Pyrolysegases unter Bildung von Synthesegas erfolgt an der Stelle (62). Die Zusammenführung gemäß Figur 1 an der Stelle (63) wird insofern umgangen. Unter Abänderung der Wärmezuführung in den Pyrolysereaktor und unter Verwendung der ansonsten selben Vorrichtungen besteht das Verfahren zur Produktion von hoch teerbeladenem Pyrolysegas, von gereinigtem Synthesegas und von teerbeladenem Pyrolysekondensat (Anteil > 40 %) mit hohem Teeranteil zum Betreiben eines Zweitakt-Zündstrahlmotors zur dezentralen Erzeugung von Strom und Wärme insofern aus folgenden Schritten:
a. Zerkleinerung von organischen oder organisches Material enthaltenden Roh- und Abfallstoffen auf die gewünschte Korngröße und Trocknung auf den erforderlichen Wassergehalt dieses Brennstoffes,
b. Zuführen des so aufbereiteten organischen Brennstoffes in einen Pyrolysereaktor,
c. Zuführen thermischer Energie zur Durchführung einer endothermen Zersetzung des organischen Brennstoffes bei einer Pyrolysetemperatur zwischen 400 °C und 650 °C unter Erzeugung von Pyrolysegas, und Pyrolysekoks,
d. Abkühlen des Pyrolysegases auf ca. 300 °C und anschließender Wäsche in einem Gaswäscher (51) mit Abkühlen auf unter 60 °C unter Auskondensation der Teere des Pyrolysegases mit gereinigtem Pyrolysekondensat und/oder Pflanzenöl,
e. Verbrennen von Pyrolysegas zur Erzeugung der für die Pyrolyse erforderlichen Wärmeenergie,
f. Fördern des Pyrolysekokses in einen Vorlagebehälter eines Vergasers oder direkt in den Vergaser und Auffangen der Kondensate zur Erzeugung von Zündöl für die Verbrennungskraftmaschine,
g. ganz oder teilweise autotherme Vergasung des Pyrolysekokses unter Zuführung von Luft und/oder technischen Sauerstoff und/oder Wasserdampf zur Bildung eines Produktgases bei Temperaturen von ca. 850 °C - 1000 °C und unter Zuführung von Wärme aus einem Teilstrom rückzuführenden Produktgases zum Heizen des Vergasers,
h. Reinigen und Kühlen des Produktgases auf ca. 300 °C,
i. Rückführung eines Teilstromes des Produktgases zum Heizen des Vergasers, unter Aufwärmung in einem Vorwärmer im Hauptstrom des heißen Produktgases,
j. Reinigen des Produktgases von Teer- und weiteren Staubpartikeln in einem Gaswäscher (16) mit einem Waschöl sowie Abkühlen des Synthesegases auf eine Temperatur von ca. 40 °C,
k. zum Waschen des Pyrolysegases und des zu erzeugenden Synthesegases wird als Waschflüssigkeit im Gaswäscher (51) ein Pflanzenöl verwendet, welches nach Sättigung in einer Zentrifuge gereinigt wird,
l. Zusammenführen des noch einen Heizwert von > 15 MJ/Nm³ besitzenden Pyrolysegases mit dem niederkalorischen Produktgas (Heizwert < 10 MJ/Nm³) unter Erzeugung des Synthesegases,
m. anschließende Reinigung des zum Betreiben der Verbrennungskraftmaschine vorgesehenen Synthesegases in einem Teer-Elektrostatikfilter nahezu vollständig von allen Teer- und Staubpartikeln gemäß Motorenanforderung,
n. Verdichten des gereinigten Synthesegases in einem Synthesegaskompressor auf > 200 bar zur direkten Synthesegaseindüsung in die Verbrennungskraftmaschine,
o. Aufarbeiten des Waschöls gemeinsam mit dem Pyrolysekondensat und dem Teer aus dem Teer-Elektrostatikfilter in einem Separator bzw. einer Zentrifuge und einem Homogenisator mit einer genau berechneten Zahngeometrie, in welchem eine mechanische Verkürzung der langkettigen Moleküle erfolgt, wobei auch das aufgearbeitete Waschöl als Zündöl in die Verbrennungskraftmaschine eingedüst wird,
p. Eindüsen sowohl des hochverdichteten Synthesegases als auch des Zündöls über separate Injektoren in den Brennraum der Verbrennungskraftmaschine und Einbringung der Verbrennungsluft, getrennt von diesen Brennstoffen ebenfalls über einen eigenen Kanal.

Die dem Pyrolysereaktor indirekt über das Verbrennen des Pyrolysegases in Form vom Wärme zugeführte erforderliche thermische Energie ist dabei derart hoch, dass die Pyrolyse bei einer Temperatur zwischen 400°C und 450°C durchgeführt wird. Das Vergasen des Pyrolysekokses erfolgt dabei in einem atmosphärischen Vergaser. Abgas kann dabei aus dem Pyrolysereaktor auch über einen Wärmetauscher (57) ausgeschleust werden, wobei dieser an einem Schornstein (58) angeschlossen ist.

### Die verwendete Vorrichtung besteht somit aus

a. einem Brennstofftrockner (1) und einem Lager mit Brennstoffvorlagebehälter;
b. einer zweistufigen Brenngaserzeugung, in der die erste Stufe ein Pyrolysereaktor (2) zur Bildung eines Pyrolysegases sowie von Pyrolysekoks und die zweite Stufe ein Vergaser (8) für Pyrolysekoks aus dem Pyrolysereaktor zur Bildung eines Produktgases (2) ist. Als Vergasertyp wird ein stationärer atmosphärischer Vergaser oder ein Drehrohrvergaser eingesetzt. Sowohl Pyrolyse als auch Vergaser können jeweils separat und unabhängig voneinander betrieben werden.

Ferner bestehend aus:
c. einem in die Pyrolyse- und Produktgasströme jeweils installierten Heißgas-Zyklonabscheider (3, 9) und einem Schlauchfilter (12) im Produktgasstrom;
d. in die jeweiligen Pyrolyse- und Produktgasströme installierte Wärmetauscher bzw. Gaskühler (4, 13), die jeweils das Pyrolyse- und Produktgas auf ca. 300 °C abkühlen;
e. aus einem jeweils im Pyrolyse- und Produktgasstrom installierten Gaswäscher (16,51);
f. aus einem im Synthesegasstrang nach Vereinigung der Leitungen der Pyrolyse- und Produktgasströme installierten Teer-Elektrostatikfilter (21);
g. einer Einrichtung über die das Synthesegas mechanisch und/oder biologisch und/oder physikalisch und/oder chemisch reinigbar ist;
h. einem Gasverdichter bzw. Synthesegaskompressor (22) mit dem das Synthesegas auf > 200 bar komprimierbar ist;
i. einer Zündölaufbereitung (19), bestehend aus einer Zentrifuge und einem Homogenisator, in dem beladenes Waschöl und/oder Kondensat aus dem Pyrolysereaktor (2) und/oder Teer aus dem Teer- Elektrostatikfilter (21) zur Verwendung als Zündöl aufarbeitbar ist;
j. einem Zweitakt-Zündstrahl-Motor (30) als Verbrennungskraftmaschine, welcher über separate Injektoren (24, 25, 26) für das hoch verdichtete Synthesegas, das aus Waschöl und/oder Pyrolyseöl, Kondensat und/oder Teeröl gebildete Zündöl sowie für die Verbrennungsluft verfügt, wobei das hoch verdichtete Synthesegas über den separaten Injektor (24) in den Zündstrahlmotor (30) eindüsbar ist;

Vorteilhaft ist diese Vorrichtung kombiniert mit einer der Zuführung der thermischen Energie in den Pyrolysereaktor gemäß Figur 1, z.B. der Zuführung von Motorenabgas und/oder einem Wärmetauscher zum Einbringen thermischer Energie.

### Gasqualitäten

| | Pyrolysegas | Produktgas aus Vergasung mit Luft | Synthesegas Mischung aus Pyrolyse- und Produktgas |
|---|---|---|---|
| LHV [kJ/Nm³] | 15.691 | 5.230 | 8.717 |
| LHV [kW/Nm³] | 4,36 | 1,45 | 2,42 |
| | [vol %] | [vol %] | [vol %] |
| Kohlendioxid (CO₂) | 37,50 | 10,00 | 19,17 |
| Kohlenmonoxid (CO) | 27,50 | 27,02 | 27,18 |
| Methan (CH₄) | 12,00 | 2,02 | 5,35 |
| Wasserstoff (H₂) | 12,50 | 7,77 | 9,35 |
| Sauerstoff (O₂) | | 0,37 | 0,37 |
| Stickstoff (N₂) | 2,00 | 47,71 | 32,47 |
| Schwefeldioxid (SO₂) | | 0,01 | 0,01 |
| Salzsäure (HCl) | | 0,00 | 0,00 |
| Wasser (H₂O) | 2,75 | 5,10 | 4,32 |
| Ethen (C₂H₄) | 1,00 | | 1,00 |
| Ethan (C₂H₆) | 1,00 | | 1,00 |
| Propan (C₃H₈) | | | 0,00 |
| Butan (C₄H₁₀) | | | 0,00 |
| 2,2-Dimethylpropan 2.0 (C₅H₁₂) | | | 0,00 |
| Benzol (C₆H₆) | | | 0,00 |
| 2,2 Dimethylbutan (C₆H₁₄) | | | 0,00 |
| CₓH_{y} | 5,50 | | |

## Patentansprüche

1. Verfahren zur Produktion von Synthesegas unter Herstellung teerbeladener Pyrolyse- und Produktgase sowie von Pyrolyse-Kondensat mit hohem Teeranteil zum Betreiben einer als Zweitakt-Zündstrahlmotor ausgebildeten Gas-Diesel-Verbrennungskraftmaschine, die zur dezentralen Erzeugung von Strom und Wärme dient,
mit folgenden Schritten:
a. Zerkleinerung von organischen oder organisches Material enthaltenden Roh- und Abfallstoffen auf die gewünschte Korngröße und Trocknung auf den erforderlichen Wassergehalt dieses Brennstoffes,
b. Zuführen des so aufbereiteten organischen Brennstoffes in einen Pyrolysereaktor,
c. Erzeugen und Zuführen thermischer Energie zur Durchführung einer endothermen Zersetzung des organischen Brennstoffes bei einer Pyrolysetemperatur zwischen 400 °C und 650 °C unter Erzeugung von Pyrolysegas und Pyrolysekoks,
d. Reinigen und Abkühlen des Pyrolysegases auf ca 300 °C und anschließende Gaswäsche mit Abkühlen auf unter 60 °C unter Auskondensation der Teere des Pyrolysegases mit Pyrolysekondensat und/oder Pflanzenöl,
e. Fördern des Pyrolysekokses in einen Vorlagebehälter eines Vergasers oder direkt in den Vergaser und Auffangen der Pyrolysekondensate zur Erzeugung von Zündöl für die als Zweitakt-Zündstrahlmotor ausgebildete Gas-Diesel-Verbrennungskraftmaschine.
f. ganz oder teilweise autotherme Vergasung des Pyrolysekokses unter Zuführung von Luft und/oder technischem Sauerstoff und/oder Wasserdampf zur Bildung eines Produktgases bei Temperaturen von ca. 1000 °C und unter Zuführung von Wärme aus einem Teilstrom rückzuführenden Produktgases zum Heizen des Vergasers,
g. Reinigen und Kühlen des Produktgases auf ca. 300 °C,
h. Rückführung des Teilstromes des Produktgases zum Heizen des Vergasers gemäß Schritt f), unter Aufwärmung in einem Vorwärmer im Hauptstrom des heißen Produktgases,
i. zusätzliches Reinigen des Produktgases oder des nach Zusammenführung aus diesem und dem Pyrolysegas gebildeten Synthesegases von Teer- und Staubpartikeln in einem Gaswäscher zumindest mit einer Waschflüssigkeit in Form eines Waschöls sowie Abkühlen auf eine Temperatur von ca. 40 °C unter Bildung eines teerhaltigen Pyrolysekondensats,
j. zum Waschen des Produktgases wird als Waschflüssigkeit ein Pflanzenöl verwendet, welches nach Sättigung in einer Zündölaufbereitung gereinigt wird,
k. Zusammenführen des noch einen Heizwert von > 15 MJ/Nm³ besitzenden Pyrolysegases mit dem niederkalorischen, zunächst gemäß Schritt i) lediglich gereinigten Produktgasr mit einem Heizwert < 10 MJ/Nm³ zu einem Synthesgas,
l. anschließende Reinigung des zum Betreiben der Verbrennungskraftmaschine vorgesehenen Synthesegases in einem Teer-Elektrostatikfilter nahezu vollständig von allen Teer- und Staubpartikeln gemäß Motorenanforderung,
m. Verdichten des gereinigten Synthesegases in einem Synthesegaskompressor auf > 200 bar zur direkten Synthesegaseindüsung in die Verbrennungskraftmaschine,
n. Aufarbeiten des mit Teer- und Staubpartikel beladenen Waschöls gemeinsam mit dem Pyrolysekondensat und dem Teer aus dem Teer-Elektrostatikfilter zu einem flüssigen Gemisch in einer Zündölaufbereitung aus einer Zentrifuge und einem Homogenisator, in welcher eine mechanische Verkürzung langkettiger Molekülketten erfolgt und dieses homogen durchmischt wird, wobei dieses flüssige homogene Gemisch als Zündöl in die als Zweitakt-Zündstrahlmotor ausgebildete Verbrennungskraftmaschine eingedüst wird,
o. Eindüsen sowohl des hochverdichteten Synthesegases als auch des Zündöls über separate Injektoren in den Brennraum der Verbrennungskraftmaschine und Einbringung der Verbrennungsluft, getrennt von diesen Brennstoffen ebenfalls über einen eigenen Kanal.

2. Verfahren zur Produktion von Synthesegas für eine Verbrennungskraftmaschine und zu deren Betreiben nach Anspruch 1, **dadurch gekennzeichnet, dass** dem Pyrolysereaktor die zur Pyrolyse des organischen, aufgearbeiteten Brennstoffes erforderliche thermische Energie in Form von Wärme in einer ersten Stufe mit bei einer Temperatur < 300 °C - 450 °C durch das Motorenabgas der Verbrennungskraftmaschine zugeführt wird und in einer zweiten Stufe über Wärmetauscher für das heiße Produktgas aus dem Vergaser, durch Direktfeuerung und/oder durch Einbringen thermischer Energie, unterstützend oder alleine, über einen Direkteintrag der heißen, aus dem Vergaser ausgetragener Bettasche und dem Bettmaterial.

3. Verfahren nach Anspruch 1 oder 2, **dadurch gekennzeichnet, dass** eine Vergasung des Pyrolysekokses in einem atmosphärischen Vergaser erfolgt.

4. Verfahren nach einem der Ansprüche 1-3, **dadurch gekennzeichnet, dass** das auf > 200 bar komprimierte Synthesegas über einen separaten Injektor in den Brennraum der Verbrennungskraftmaschine eingedüst wird, wobei die Verbrennungsluft über einen eigenen Kanal in den Brennraum gelangt.

5. Verfahren nach einem der Ansprüche 1-4, **dadurch gekennzeichnet, dass** in der Zündölaufbereitung zusammenzuführendes beladenes Waschfluid, Pyrolyseöl sowie Pyrolysekondensat zunächst in einem Separator von groben Verunreinigungen gereinigt werden

6. Verfahren nach einem der Ansprüche 1-5, **dadurch gekennzeichnet, dass** die Gaswäsche des Produktgases und/oder des gebildeten Synthesegases ausschließlich mit einem Waschöl in Form eines Pflanzenöls durchgeführt wird, welches nach Sättigung als Zündöl aufbereitet wird.

7. Verfahren nach einem der Ansprüche 1-6, **dadurch gekennzeichnet, dass** das zusätzliche Reinigen des Pyrolysegases unter Auskondensation von Teer und anderen langkettigen Kohlenwasserstoffmolekülen unter Einsatz von Pflanzenöl oder Biodiesel als Waschflüssigkeit erfolgt, wobei das beladene Waschfluid gemeinsam mit dem anfallenden Pyrolyseöl, Teer oder Pyrolysekondensat dem Zündöl der Verbrennungskraftmaschine beigemischt wird.

8. Vorrichtung zur Durchführung des Verfahrens nach einem oder mehreren der Ansprüche 1-7, bestehend aus:
a. einem Brennstofftrockner (1) und einem Lager mit Brennstoffvorlagebehälter;
b. einer Vorrichtung zur zweistufigen Brenngaserzeugung aus Synthesegas und dem zum Verbrennen im Zweitakt-Zündstrahlmotor dienenden Zündöl,
in der die erste Stufe ein Pyrolysereaktor (2) zur Bildung eines Pyrolysegases sowie von Pyrolysekoks und die zweite Stufe ein stationärer atmosphärischer Vergaser (8) für Pyrolysekoks aus dem Pyrolysereaktor (2) zur Bildung eines Produktgases ist,
wobei diese zur Brenngaserzeugung in zwei Stufen geschaltet sind und die erste Stufe in dem Pyrolysereaktor (2) und die zweite Stufe in dem stationären atmosphärischen Vergaser (8) erfolgt, sowie der Pyrolysereaktor (2) einen Wärmetauscher für das Produktgas aufweist, so dass die für die Pyrolyse erforderliche thermische Energie aus dem Energiegehalt des in dem Vergaser (8) erzeugten Produktgases gewinnbar ist, oder dass die für die Pyrolyse erforderliche thermische Energie über eine Eintragvorrichtung der in einem Lager (37) gesammelten heißen Bettasche und des Bettmaterials aus dem Vergaser (8) erfolgen kann.
ferner bestehend aus:
c. einem in die Pyrolyse- und Produktgasströme jeweils installierten Heißgas-Zyklonabscheider (3, 9) und einem Schlauchfilter (12) im Produktgasstrom;
d. in die jeweiligen Pyrolyse- und Produktgasströme installierte Wärmetauscher (4, 13) zum jeweiligen Abkühlen des Pyrolyse- und Produktgases auf ca. 300 °C;
e. einem jeweils in den Pyrolyse- und Produktgasstrom bzw. Synthesegasstrom installierten Gaswäscher (16, 51);
f. aus einem im Synthesegasstrang nach Vereinigung der Leitungen der Pyrolyse- und Produktgasströme installierten Teer-Elektrostatikfilter (21);
g. einer Einrichtung über die das Synthesegas mechanisch und/oder biologisch und/oder physikalisch und/oder chemisch reinigbar ist;
h. einem Synthesegaskompressor (22) mit dem das Synthesegas auf > 200 bar komprimierbar ist;
i. einer Zündöl-Aufbereitung (19), bestehend aus einer Zentrifuge und einem Homogenisator, in der beladenes Waschöl, und/oder Pyrolysekondensat aus dem Pyrolysereaktor (2) und/oder Teer aus dem Teer-Elektrostatikfilter (21) zur Verwendung als Zündöl aufarbeitbar ist;
j. einem Zweitakt-Zündstrahl-Motor (30) als Verbrennungskraftmaschine, welcher über separate Injektoren (24, 25, 26) für das hoch verdichtete Synthesegas, für das aus Waschöl und/oder Pyrolyseöl bzw. Pyrolysekondensat und/oder Teeröl gebildete Zündöl sowie für die Verbrennungsluft verfügt, wobei das hoch verdichtete Synthesegas über den separaten Injektor (24) in den Zweitakt-Zündstrahlmotor (30) eindüsbar ist;

9. Vorrichtung nach Anspruch 8, **dadurch gekennzeichnet, dass** eine Sauerstoffproduktionsanlage (50) parallel zum Vergaser (8) betreibbar ist und dieser mit entsprechenden Düsen ausgestattet ist, um als Vergasungsmittel technischen Sauerstoff und/oder Wasserdampf einzudüsen;

10. Vorrichtung nach Anspruch 8 oder 9 **dadurch gekennzeichnet, dass** ein CO₂-Wäscher (52) in den Synthesegasstrom installiert ist, um den CO₂-Gehalt im Synthesegas weitgehend auszuwaschen;

11. Vorrichtung nach Anspruch 8, 9 oder 10, **dadurch gekennzeichnet, dass** ein Synthesereaktor (55) installiert ist, um den H₂- und den CO-Anteil im Synthesegas in der erforderlichen Relation auszuschleusen und gem. Fischer-Tropsch-Verfahren zu verflüssigen;

## Claims

1. A method for producing synthesis gas by producing tar-laden pyrolysis and product gases as well as pyrolysis condensate with a high proportion of tar for operating a gas-diesel oil combustion machine in the form of a two-stroke dual-fuel internal combustion engine, used for decentralized generation of current and heat, comprising the following steps:
a. shredding organic raw and waste materials or containing organic matter to obtain the requested grain size and drying to obtain the requested water content of said fuel,
b. feeding the so prepared organic fuel into a pyrolysis reactor,
c. generating and feeding thermal energy for performing an endothermal decomposition of the organic fuel at a pyrolysis temperature between 400°C and 650°C while generating pyrolysis gas and pyrolysis coke,
d. purifying and cooling the pyrolysis gas to approx. 300°C followed by gas washing with cooling below 60°C by condensing the tars out with pyrolysis condensate and/or vegetable oil,
e. conveying the pyrolysis coke into a fuel barrier (container) of a gasifier or directly into the gasifier and capturing the pyrolysis condensate for generating ignition oil for the gas-diesel oil combustion machine in the form of an internal combustion engine,
f. total or partial autothermal gasification of the pyrolysis coke by supplying air and/or technical oxygen and/or water steam to form a product gas at temperatures of approx. 1000°C and by supplying heat from a product gas thus recirculating branch current for heating the gasifier,
g. purifying and cooling the product gas to approx. 300 °C,
h. recirculating the branch current of the product gas for heating the gasifier according to step f), by heating up in a preheater in the main stream of the hot product gas,
i. additional purifying of the product gas or of the synthesis gas formed after aggregation of the same and of the pyrolysis gas of tar and dust particles in a gas scrubber at least with a washing medium such as a washing oil as well as cooling to a temperature of approximately 40°C by forming a tar-containing pyrolysis condensate,
j. gas washing of the product gas is carried out with a washing medium in the form of a vegetable oil purified after saturation in an ignition oil preparation,
k. aggregation of the pyrolysis gas still having a calorific value of > 15 MJ/Nm³ with the low-calory, first of all exclusively purified product gas according to step i) with a calorific value < 10 MJ/Nm³ to form a synthesis gas,
l. subsequent purifying the synthesis gas provided for operating the combustion machine in a tar electrostatic filter to remove practically all tar and dust particles according to the engine requirements,
m. compressing the purified synthesis gas in a synthesis gas compressor to > 200 bar for direct injection of the synthesis gas into the internal combustion engine,
n. processing the washing oil loaded with tar and dust particles together with the pyrolysis condensate and the tar by extraction from the tar electrostatic filter to a liquid homogenous mixture in an ignition oil preparation from a centrifuge and a homogeniser, with mechanical shortening of the long-chain molecules, whereas said liquid homogenous mixture is injected as ignition oil into the combustion machine in the form of a two-stroke dual-fuel internal combustion engine,
o. injection of the highly compressed synthesis gas as well as of the ignition oil via separate injectors into the combustion chamber of the combustion machine and by introduction of the combustion air, separately from said fuels also via its own channel.

2. A method for producing synthesis gas for an internal combustion engine and for operating the same according to claim 1, **characterized in that** the thermal energy required for pyrolysis of the organic processed fuel is conveyed to the pyrolysis reactor in the form of heat in a first step at a temperature < 300°C - 450°C through the exhaust gas of the combustion machine and in a second step via heat exchangers for the hot product gas out of the gasifier, by direct firing and/or by introducing thermal energy, as a back-up or on their own, via a direct introduction of the hot bed ash evacuated from the gasifier, and the bed material.

3. A method according to claim 1 or 2, **characterized in that** the pyrolysis coke is gasified in an atmospheric gasifier.

4. A method according to one of the claims 1-3, **characterized in that** the synthesis gas compressed to > 200 bar is injected into the combustion chamber of the combustion machine via a separate injector, whereas the combustion air reaches into the combustion chamber via its own channel.

5. A method according to one of the claims 1-4, **characterized in that** the laden washing fluid, the pyrolysis oil as well as the pyrolysis condensate which are to be combined in the ignition oil preparation first are purified from gross impurities in a separator.

6. A method according to one of the claims 1-5, **characterized in that** only a washing oil out of a vegetable oil is used for gas scrubbing of the product gas and/or the formed synthesis gas, which vegetable oil is purified after saturation as ignition oil.

7. A method according to one of the claims 1-6, **characterized in that** the additional purification of the pyrolysis gas by removing of tars and other long-chained hydrocarbon molecules by condensation is carried out with a washing medium in the form of a vegetable oil or of a biodiesel whereas the laden washing fluid together with the occurring pyrolysis oil, tar or pyrolysis condensate are mixed with the ignition oil used for the combustion machine.

8. A device for realizing the method according to one or several of the claims 1-7, comprising:
a. a fuel drier (1) and a storage unit with a fuel collecting tank;
b. a device for two-stage generation of fuel gas for a synthesis gas and for an ignition oil used for combustion in the two-stroke dual-fuel engine,
in which the first stage is a pyrolysis reactor (2) to produce a pyrolysis gas as well as pyrolysis coke and the second stage is a stationary atmospheric gasifier (8) for pyrolysis coke coming out of the pyrolysis reactor (2) to obtain a product gas,
whereas said elements are connected into two steps for fuel gas generation and the first step takes place in the pyrolysis reactor (2) and the second step in the stationary atmospheric gasifier (8), as well as the pyrolysis reactor (2) includes a heat exchanger for the product gas, so that the thermal energy required for pyrolysis can be reclaimed from the energy of the product gas generated in the gasifier (8) or that the thermal energy required for the pyrolysis is generated by an introduction device for the hot bed ash collected in a storage unit (37) and for the bed material coming out of the gasifier (8) for injection into the pyrolysis reactor (2);
further comprising:
c. a hot gas cyclone separator (3, 9) respectively installed in the pyrolysis and product gas streams, and a hose filter (12) in the product gas stream;
d. heat exchangers (4, 13) installed in the respective pyrolysis and product gas streams for respective cooling of the pyrolysis and product gas to approx. 300°C;
e. a gas scrubber (16, 51) respectively installed in the pyrolysis and product gas stream or synthesis gas stream;
f. a tar electrostatic filter (21) installed in the synthesis gas strang after junction of the pipes of the pyrolysis and product gas streams;
g. a device enabling mechanical and/or biological and/or physical and/or chemical purification of the synthesis gas;
h. a synthesis gas compressor (22) with which the synthesis gas can be compressed to > 200 bar:
i. an ignition oil preparation (19), consisting out of a centrifuge and a homogeniser in which laden washing oil and/or pyrolysis condensate coming out of the pyrolysis reactor (2) and/or tar coming out of the tar electrostatic filter (21) can be processed for use as ignition oil;
j. a two-stroke dual-fuel internal combustion engine (30) used as combustion machine, which has separate injectors (24, 25, 26) for the highly compressed synthesis gas, for washing oil and/or pyrolysis oil or pyrolysis condensate and/or tar oil, as well as for the combustion air, whereas the highly compressed synthesis gas can be injected via the separate injector (24) into the two-stroke dual-fuel internal combustion engine (30).

9. A device according to claim 8, **characterized in that** an oxygen production unit (50) can be operated parallel to the gasifier and that said gasifier is provided with corresponding nozzles, so as to inject technical oxygen and/or water steam as gasification means.

10. A device according to claim 8 or 9, **characterized in that** a CO₂-washer (52) is installed in the synthesis gas stream, for extensive washing out of the CO₂-content in the synthesis gas.

11. A device according to claim 8, 9 or 10, **characterized in that** a synthesis reactor (55) is installed, so as to separate the H₂ content and the CO-content in the synthesis gas as required and to liquefy them according to the Fischer-Tropsch process.

## Revendications

1. Méthode pour la production de gaz de synthèse à partir de la fabrication de gaz de pyrolyse et de gaz de produit chargés de goudron ainsi que de condensat de pyrolyse avec une grande proportion de goudron pour faire fonctionner une machine à combustion interne diesel et gaz formée comme un moteur à deux temps à combustion interne alimenté par injection, utilisée pour la production décentralisée d'électricité et de chaleur, comprenant les étapes suivantes:
a. le broyage de matières premières ou produits résiduaires organiques ou contenant des matériaux organiques jusqu'à atteindre les dimensions de la particule souhaitée et le séchage jusqu'à atteindre la teneur en eau requise de ce carburant,
b. l'alimentation du carburant organique ainsi préparé dans un réacteur de pyrolyse,
c. la génération et l'alimentation de l'énergie thermique pour effectuer une décomposition endothermique du carburant organique à une température de pyrolyse comprise entre 400 °C et 650 °C moyennant la production de gaz de pyrolyse et de coke de pyrolyse,
d. la purification et le refroidissement du gaz de pyrolyse à environ 300 °C suivi du lavage ultérieur avec refroidissement au-dessous de 60 °C moyennant la condensation des goudrons du gaz de pyrolyse avec le condensat de pyrolyse et/ou de l'huile végétale,
e. le transport de coke de pyrolyse dans un réservoir de stockage d'un carburateur ou directement dans le carburateur et ramassage des condensats de pyrolyse pour produire le gazole d'allumage pour la machine à combustion interne de diesel et gaz formée comme un moteur à deux temps à combustion interne alimenté par injection,
f. la gazéification auto-thermique totale ou partielle de coke de pyrolyse au moyen de l'alimentation d'air et/ou oxygène technique et/ou vapeur d'eau pour former un gaz de produit à des températures de 1000 °C environ et chauffage moyennant l'alimentation de chaleur d'une partie du flux du gaz de produit réalimenté pour le chauffage du carburateur,
g. la purification et le refroidissement du gaz de produit à environ 300 °C.
h. la réalimentation d'une partie du flux du gaz de produit pour chauffer le carburateur selon l'étape f) au moyen du chauffage dans un réchauffeur dans le flux principal du gaz de produit chaud,
i. la purification additionnelle du goudron et des particules de poussière du gaz de produit ou du gaz de synthèse formé après l'agrégation de celui-ci et du gaz de pyrolyse, dans un laveur de gaz avec, au moins, un liquide de lavage sous forme d'huile de lavage et le refroidissement jusqu'à atteindre une température d'environ 40 °C avec la formation d'un condensat de pyrolyse contenant du goudron,
j. l'utilisation d'une huile végétale comme liquide de lavage pour laver le gaz de produit, qui est purifié, après la saturation, dans un traitement du gazole d'allumage,
k. l'agrégation du gaz de pyrolyse possédant encore une valeur calorifique de >15 MJ/Nm³ avec du gaz de produit faiblement calorique au début uniquement purifié conformément à l'étape i) ayant une valeur calorifique <10 MJ/Nm³ à un gaz de synthèse,
l. la purification subséquente du gaz de synthèse destiné à faire fonctionner la machine à combustion interne dans un filtre électrostatique de goudron en éliminant presque complètement toutes les particules de goudron et de poussière, selon les besoins du moteur,
m. le compactage du gaz de synthèse propre dans un compresseur de gaz de synthèse à >200 bar pour l'injection directe de gaz de synthèse dans la machine à combustion interne,
n. le traitement de l'huile de lavage chargé de particules de goudron et de poussière avec le condensat de pyrolyse et le goudron du filtre électrostatique de goudron pour produire un mélange liquide dans un traitement de gazole d'allumage provenant d'une centrifugeuse et d'un homogénéisateur, dans lequel une réduction mécanique des chaînes de molécules à chaîne longue a lieu, où le mélange liquide est mélangé de façon homogène, où ce mélange homogène liquide est injecté comme gazole d'allumage dans la machine à combustion interne formée comme un moteur à deux temps à combustion interne alimenté par injection,
o. l'injection du gaz de synthèse à haute densité ainsi que du gazole d'allumage par des injecteurs séparés dans la chambre de combustion de la machine à combustion interne et l'introduction d'air de combustion séparé de ces carburants, également sur son même canal.

2. Méthode pour la production de gaz de synthèse pour une machine à combustion interne et son fonctionnement selon la revendication 1, **caractérisée en ce que** le réacteur de pyrolyse est alimenté avec de l'énergie thermique sous forme de chaleur dans une première étape avec une température <300 °C - 450 °C nécessaire pour la pyrolyse du carburant organique traité à travers le gaz d'échappement de la machine à combustion interne et, dans une deuxième étape, à travers des échangeurs de chaleur pour le gaz de produit chaud du carburateur, par combustion directe ou par l'intermédiaire de l'énergie thermique, seules ou assistées, à travers une entrée directe de la cendre chaude du lit du carburateur et le matériau du lit.

3. Méthode selon la revendication 1 ou 2, **caractérisée en ce qu'**une gazéification de coke de pyrolyse est effectuée dans un carburateur atmosphérique.

4. Méthode selon l'une quelconque des revendications 1 à 3, **caractérisée en ce que** le gaz de synthèse comprimé à >200 bar est injecté à travers un injecteur séparé dans la chambre de combustion de la machine à combustion interne, où l'air de combustion pénètre à travers un canal propre dans la chambre de combustion.

5. Méthode selon l'une quelconque des revendications 1 à 4, **caractérisée en ce que** lors du traitement du gazole, le fluide de lavage, l'huile de pyrolyse et le condensat de pyrolyse sont initialement purifiés d'impuretés grossières dans un séparateur.

6. Méthode selon l'une quelconque des revendications 1 à 5, **caractérisée en ce que** le lavage du gaz de produit et/ou du gaz de synthèse formé s'effectue seulement avec une huile de lavage sous forme d'huile végétale, qui est traitée comme gazole d'allumage après sa saturation.

7. Méthode selon l'une quelconque des revendications 1 à 6, **caractérisée en ce que** la purification additionnelle du gaz de pyrolyse sous condensation du goudron et d'autres molécules d'hydrocarbures à chaîne longue a lieu en utilisant de l'huile végétale ou biodiésel comme liquide de lavage, où le liquide de lavage chargé, conjointement avec l'huile de pyrolyse, le goudron ou le condensat de pyrolyse résultants, est ajouté au gazole d'allumage de la machine à combustion interne.

8. Dispositif pour la mise en oeuvre de la méthode selon l'une ou plusieurs des revendications 1 à 7, comprenant:
a. un déshydrateur de carburant (1) et une unité de contention avec un réservoir de stockage de carburant;
b. un dispositif de production de gaz de carburant à deux étapes à partir de gaz de synthèse et de gazole d'allumage utilisé pour la combustion dans un moteur à deux temps alimenté par injection, où le premier niveau est un réacteur de pyrolyse (2) pour créer un gaz de pyrolyse et coke de pyrolyse et le deuxième niveau est un carburateur atmosphérique stationnaire (8) pour former un gaz de produit à partir de coke de pyrolyse provenant du réacteur de pyrolyse (2),
où ceux-ci sont disposés à deux niveaux pour la production de gaz de carburant et la première étape est effectuée dans le réacteur de pyrolyse (2) et la deuxième étape est effectuée dans le carburateur atmosphérique stationnaire (8), en plus du réacteur de pyrolyse (2), un échangeur de chaleur est disposé pour le gaz de produit afin de pouvoir obtenir l'énergie thermique nécessaire pour la pyrolyse à partir du contenu énergétique du gaz de produit généré dans le carburateur (8), ou de sorte que l'énergie thermique nécessaire pour la pyrolyse puisse se produire avec un dispositif d'alimentation des cendres chaudes du lit et la matière du lit du carburateur (8) recueillis dans un réservoir (37).
Comprenant, en outre:
c. un séparateur cyclonique (3, 9) de gaz chaud respectivement installé dans les flux du gaz de pyrolyse et du gaz de produit et un filtre à manche (12) dans le flux de gaz de produit;
d. un échangeur de chaleur (4, 13) respectivement installé dans les flux du gaz de pyrolyse et du gaz de produit pour le refroidissement respectif du gaz de pyrolyse et du gaz de produit à environ 300 °C;
e. un laveur de gaz (16, 51) respectivement installé dans le flux du gaz de pyrolyse et du gaz de produit ou le flux du gaz de synthèse;
f. un filtre électrostatique de goudron (21) installé dans la section de gaz de synthèse après la connexion des conduits des flux de gaz de pyrolyse et de gaz de produit;
g. un dispositif qui permet la purification mécanique et/ou biologique et/ou physique et/ou chimique du gaz de synthèse.
h. un compresseur de gaz de synthèse (22) avec lequel le gaz de synthèse peut être comprimé à >200 bar;
i. un traitement du gazole d'allumage (19) constitué d'une centrifugeuse et d'un homogénéisateur, dans lequel l'huile de lavage chargé, et/ou le condensat de pyrolyse provenant du réacteur de pyrolyse (2) et/ou le goudron provenant du filtre électrostatique de goudron (21) peuvent être traités pour une utilisation comme gazole d'allumage;
j. un moteur à deux temps alimenté par injection (30) sous forme de machine à combustion interne, qui dispose d'injecteurs séparés (24, 25, 26) pour le gaz de synthèse hautement comprimé, pour le gazole d'allumage formé à partir de l'huile de lavage et/ou de l'huile de pyrolyse ou du condensat de pyrolyse et/ou de l'huile de goudron, ainsi que pour l'air de combustion, où le gaz de synthèse hautement comprimé peut être injecté par l'intermédiaire de l'injecteur séparé (24) dans le moteur à deux temps alimenté par injection (30);

9. Dispositif selon la revendication 8, **caractérisé en ce qu'**une installation de production d'oxygène (50) peut être opérée parallèlement au carburateur (8) équipé d'un gicleur approprié pour injecter de l'oxygène technique et/ou de la vapeur d'eau comme agent de gazéification.

10. Dispositif selon la revendication 8 ou 9, **caractérisé en ce qu'**un laveur de CO₂ (52) est installé dans le flux de gaz de synthèse pour purifier en grande partie le contenu en CO₂ dans les gaz de synthèse;

11. Dispositif selon la revendication 8, 9 ou 10, **caractérisé en ce qu'**un réacteur de synthèse (55) est installé pour extraire le contenu en H₂ et en CO dans les gaz de synthèse, dans la relation nécessaire et les liquéfier conformément aux processus de Fischer-Tropsch;
